# EUROPÄISCHE PATENTSCHRIFT

(11) **EP 2 888 471 B1**
(45) Veröffentlichungstag und Bekanntmachung des Hinweises auf die Patenterteilung: **03.05.2017**
(21) Anmeldenummer: 13750726.5
(22) Anmeldetag: 22.08.2013
(51) Int. Cl.: F02M 63/00

(54) **ELEKTROMAGNETISCHER AKTUATOR, VENTIL UND EINSPRITZPUMPE**
ELECTROMAGNETIC ACTUATOR, VALVE, AND INJECTION PUMP
ACTIONNEUR ÉLECTROMAGNÉTIQUE, SOUPAPE ET POMPE À INJECTION

(30) Priorität: 22.08.2012 DE 102012214920
(43) Veröffentlichungstag der Anmeldung: 01.07.2015
(73) Patentinhaber: Continental Automotive GmbH, 30165 Hannover (DE)
(72) Erfinder: FRUTH, Reinhard, 92355 Velburg-Günching (DE); GEBHARDT, Xaver, 93059 Regensburg (DE); WÖLLISCH, Bernd, 93413 Cham (DE); HENFLING, Christian, 93049 Regensburg (DE); WEBER, Rainer, 93049 Regensburg (DE); BLEECK, Matthias, 93049 Regensburg (DE)
(86) Internationale Anmeldenummer: PCT/EP2013/067476
(87) Internationale Veröffentlichungsnummer: WO 2014/029850

(56) Entgegenhaltungen:
- EP-A1- 1 270 930
- WO-A1-2004/055357
- DE-A1-102009 001 706
- DE-A1-102010 064 105
- GB-A- 2 065 833

## Beschreibung

Die Erfindung betrifft einen elektromagnetischen Aktuator, ein Ventil mit einem solchen Aktuator, insbesondere ein Einlassventil für eine Kraftstoffeinspritzpumpe, sowie eine Einspritzpumpe mit einem solchen Ventil.

Ein elektromagnetischer Aktuator sowie ein Ventil innerhalb einer Kraftstoffeinspritzpumpe ist insbesondere bekannt aus der internationalen Offenlegungsschrift WO 2013098249 A1.

Bei gattungsgemäßen elektromagnetischen Aktuatoren und Ventilen schlagen beim Betätigen des Ventils die gegenüberliegenden Flächen von Magnetanker und Polkern des elektromagnetischen Aktuators aufeinander. Dies verursacht ggf. nicht nur laute Betriebsgeräusche, sondern kann insbesondere bei Ventilen mit schnellen Schließgeschwindigkeiten dazu führen, dass die aufeinander prallenden Oberflächen beschädigt werden. Als Konsequenz ist unter Umständen die Lebensdauer bzw. die Einsatzdauer der Ventile begrenzt, und die Ventile müssen in relativ kurzen Intervallen überprüft oder ausgetauscht werden. Bei Magnetventilen versucht man im Stand der Technik diesem Problem mit einer Optimierung der Ansteuerung des Magneten zu begegnen.

DE 10 2010 064 105 A1 beschreibt ein Ventil zum Einspritzen von Kraftstoff, umfassend ein Ventilstellelement, einen Anker, welcher mit Ventilstellelement verbunden ist, einen Anschlag, welcher eine Bewegung des Ankers begrenzt, und ein Dämpfungselement, welches zwischen dem Anker und dem Anschlag vorgesehen ist, wobei das Dämpfungselement als Dämpfungsschicht auf zumindest einem Teil des Ankers und/oder auf zumindest einem Teil des Anschlags aufgebracht ist.

EP 1 270 930 A1 betrifft ein Magnetventil zur Steuerung eines Einspritzventils einer Brennkraftmaschine, umfassend ein Gehäuseteil, einen Elektromagneten mit Magnetspule und Magnetkern, einen zwischen dem Elektromagneten und einem Ventilsitz axial beweglichen von einer Ventilfeder beaufschlagten Anker und ein mit dem Anker bewegtes und mit dem Ventilsitz zusammenwirkendes Steuerventilglied zum Öffnen und Schließen eines Kraftstoffdurchgangs, bei dem der Anker frei von mechanischen Führungsmitteln in radialer Richtung beweglich in dem Gehäuseteil angeordnet ist. Eine Weiterbildung sieht vor, dass der Anker bei einer Strombeaufschlagung des Elektromagneten in radialer Richtung durch dann auf den Anker einwirkende magnetische Reluktanzkräfte in eine bezogen auf die Mittelachse des Elektromagneten zentrische Position ausgerichtet wird.

WO 2004/055357 A1 bezieht sich auf ein Magnetventil zur Betätigung eines Kraftstoffinjektors mit einem Magnetkern. In diesem ist eine Magnetspule aufgenommen. Eine Schließfeder wirkt auf den Magnetanker in Schließrichtung. Zwischen einer dem Magnetanker zuweisenden Stirnseite der Anschlagshülse und dem Magnetanker ist ein Austrittsspalt für ein Betätigungsfluid gebildet. Der Austrittsspalt mündet in einen hydraulischen Dämpfungsraum, der von einer Stirnseite des Magnetankers und von einer Dämpfungsfläche aus nichtmagnetischen Werkstoff begrenzt wird.

GB 2 065 833 A offenbart ein elektromagnetisch betätigbares Ventil zur Einspritzung von Kraftstoff in ein Saugrohr einer Brennkraftmaschine. Das Ventil umfasst einen Flachanker, der mit einem mit einem festen Ventilsitz zusammenwirkenden, als Kugel ausgebildeten beweglichen Ventilteil fest verbunden ist. Der Flachanker ist auf seiner dem Ventilsitz abgewandten Seite oder der zugewandten Seite an einer Federzunge schwenkbar gelagert. Die einseitige Fixierung des Flachankers an der Federzunge gewährleistet eine eindeutige Anzugs- oder Abfallbewegung des Flachankers.

DE 10 2009 001 706 A1 bezieht sich auf eine Magnetbaugrupe zur Betätigung eines Kraftstoffinjektors. Die Magnetbaugruppe umfasst einen Magnetkern sowie eine diesen aufnehmende Magnethülse. Eine Stirnseite des Magnetkerns weist einem Anker zu. Eine Restluftspaltscheibe ist zwischen dem Magnetkern und der Magnethülse eingelegt.

Es ist eine Aufgabe der Erfindung einen elektromagnetischen Aktuator mit einer geringeren Lärmemission und einer längeren Einsatzdauer als bekannte Ventile zur Verfügung zu stellen, der zugleich kostengünstig hergestellt werden kann. Des Weiteren ist es eine Aufgabe ein Ventil mit solch einem Aktuator sowie eine Einspritzpumpe mit solch einem Ventil zur Verfügung zu stellen. auf zumindest einem Teil des Ankers und/oder auf zumindest einem Teil des Anschlags aufgebracht ist.

EP 1 270 930 A1 betrifft ein Magnetventil zur Steuerung eines Einspritzventils einer Brennkraftmaschine, umfassend ein Gehäuseteil, einen Elektromagneten mit Magnetspule und Magnetkern, einen zwischen dem Elektromagneten und einem Ventilsitz axial beweglichen von einer Ventilfeder beaufschlagten Anker und ein mit dem Anker bewegtes und mit dem Ventilsitz zusammenwirkendes Steuerventilglied zum Öffnen und Schließen eines Kraftstoffdurchgangs, bei dem der Anker frei von mechanischen Führungsmitteln in radialer Richtung beweglich in dem Gehäuseteil angeordnet ist. Eine Weiterbildung sieht vor, dass der Anker bei einer Strombeaufschlagung des Elektromagneten in radialer Richtung durch dann auf den Anker einwirkende magnetische Reluktanzkräfte in eine bezogen auf die Mittelachse des Elektromagneten zentrische Position ausgerichtet wird.

WO 2004/055357 A1 bezieht sich auf ein Magnetventil zur Betätigung eines Kraftstoffinjektors mit einem Magnetkern. In diesem ist eine Magnetspule aufgenommen. Eine Schließfeder wirkt auf den Magnetanker in Schließrichtung. Zwischen einer dem Magnetanker zuweisenden Stirnseite der Anschlagshülse und dem Magnetanker ist ein Austrittsspalt für ein Betätigungsfluid gebildet. Der Austrittsspalt mündet in einen hydraulischen Dämpfungsraum, der von einer Stirnseite des Magnetankers und von einer Dämpfungsfläche aus nichtmagnetischen Werkstoff begrenzt wird.

GB 2 065 833 A offenbart ein elektromagnetisch betätigbares Ventil zur Einspritzung von Kraftstoff in ein Saugrohr einer Brennkraftmaschine. Das Ventil umfasst einen Flachanker, der mit einem mit einem festen Ventilsitz zusammenwirkenden, als Kugel ausgebildeten beweglichen Ventilteil fest verbunden ist. Der Flachanker ist auf seiner dem Ventilsitz abgewandten Seite oder der zugewandten Seite an einer Federzunge schwenkbar gelagert. Die einseitige Fixierung des Flachankers an der Federzunge gewährleistet eine eindeutige Anzugs- oder Abfallbewegung des Flachankers.

DE 10 2009 001 706 A1 bezieht sich auf eine Magnetbaugrupe zur Betätigung eines Kraftstoffinjektors. Die Magnetbaugruppe umfasst einen Magnetkern sowie eine diesen aufnehmende Magnethülse. Eine Stirnseite des Magnetkerns weist einem Anker zu. Eine Restluftspaltscheibe ist zwischen dem Magnetkern und der Magnethülse eingelegt.

Es ist eine Aufgabe der Erfindung einen elektromagnetischen Aktuator mit einer geringeren Lärmemission und einer längeren Einsatzdauer als bekannte Ventile zur Verfügung zu stellen, der zugleich kostengünstig hergestellt werden kann. Des Weiteren ist es eine Aufgabe ein Ventil mit solch einem Aktuator sowie eine Einspritzpumpe mit solch einem Ventil zur Verfügung zu stellen.

Diese Aufgaben werden durch den elektromagnetischen Aktuator gemäß Anspruch 1, durch ein Ventil gemäß Anspruch 7 sowie durch Einspritzpumpe nach Anspruch 8 gelöst.

Gemäß einem ersten Aspekt umfasst der elektromagnetische Aktuator insbesondere einen Elektromagnet, umfassend eine Spule, die einen Polkern umgibt und einen (Magnet-) Anker, der mittels des Elektromagnets in Richtung des Polkerns bewegbar ist, wobei der Magnetanker eine dem Polkern zugewandte Auflagefläche aufweist und der Polkern eine entsprechend gegenüberliegende Gegenfläche aufweist.

Die Auflagefläche und/oder die Gegenauflagefläche weist/weisen eine Schicht auf, die eine direkte Berührung der Auflagefläche mit der Gegenauflagefläche verhindert und eine Dämpfung der annähernden Bewegung bewirkt.

Die Schicht kann zum Beispiel aus einem Metall, aus einem Verbundstoff, zum Beispiel mit Kohlenstofffasern oder einem Kunststoff bestehen. Umfasst von dem Begriff Kunststoff sind auch Lacke, Harze, Farben. etc., mit und ohne Beimischungen von festen Partikeln, die zum Beispiel auf die Auflagefläche und/oder Gegenauflagefläche aufgespritzt oder aufgedruckt werden können. Die Schicht kann auch aus mehreren Schichten oder Komponenten aus unterschiedlichen Materialien gebildet sein. Sie kann zumindest teilweise aus einem elastisch verformbaren Material gebildet sein oder ein solches Material umfassen.

Die Schicht besteht aus einem Material und weist eine Form auf, sodass die Schließbewegung des Ventils durch die Schicht zumindest hydraulisch, insbesondere pneumatisch gedämpft wird. Gleichzeitig können dadurch auch die Geräusche, die zum Beispiel beim Aufschlagen der Gegenauflagefläche auf die Auflagefläche entstehen, wirkungsvoll gedämpft werden, was zu einer Reduzierung der Ventilgeräusche führt. Da die Schicht die Wucht des mechanischen Aufschlags der Gegenauflagefläche auf die Auflagefläche dämpft, können weniger mechanischen Schäden am Ventil auftreten, was zu einer kostensparenden längeren Einsatzdauer des Ventils führen kann.

Die dämpfende Schicht ist mit der Auflagefläche und/oder der Gegenauflagefläche fest verbunden, zum Beispiel aufgelegt, aufgeklebt oder geschweißt. Bevorzugt weist die dämpfende Schicht überall eine gleichmäßige Dicke auf. Ist eine dämpfende Schicht auf der Auflagefläche und der Gegenauflagefläche gebildet, so sind diese dämpfenden Schichten bevorzugt so angeordnet, dass sie bei maximaler Annäherung nicht überlappen.

Die Auflagefläche und/oder Gegenauflagefläche kann/können aber auch in der Oberfläche Ausnehmungen aufweisen, in die die dämpfende Schicht zumindest teilweise eingesetzt und zum Beispiel durch Formschluss oder Adhäsion gehalten wird, wobei die dämpfende Schicht im Bereich der Ausnehmungen eine Dicke aufweisen kann, die größer ist, als die Tiefe der Ausnehmung/en, sodass die dämpfende Schicht über eine Oberseite der Auflagefläche und/oder Gegenauflagefläche vorsteht.

Eine Geometrie oder Form der dämpfenden Schicht ist frei wählbar und kann an die Erfordernisse, zum Beispiel die gewünschten Dämpfungseigenschaften und/oder gewünschte Steifigkeit, des Ventils aufgrund seiner Verwendung angepasst werden. Die Geometrie kann beispielsweise so gewählt werden, dass die Form der dämpfenden Schicht ein Abfließen des durch das Ventil fließenden Mediums beim Schließen des Ventils unterstützt. Gleichzeitig kann das Abfließen des Mediums durch die vorgegebene Geometrie eine hydraulische Dämpfung der Schließbewegung bewirken.

Dazu weist die dämpfende Schicht Stege und Freiräume zwischen jeweils zwei benachbarten Stegen auf. Die Stege und Freiräume der dämpfenden Schicht können identische oder unterschiedliche Formen aufweisen, bevorzugt sind alle Stege und alle Freiräume einer dämpfenden Schicht gleich geformt. Die Freiräume können so geformt sein, dass das in den Freiräumen gehaltene Medium beim Ausfließen aus den Freiräumen durch die annähernde Bewegung der Auflage- und gegenauflagefläche verdichtet und/oder beschleunigt werden kann. Zum Beispiel können die Freiräume taschenförmig gebildet sein, mit einer Verengung in Richtung des Ausflusses durch die das Medium verdrängt werden muss. Dadurch kommt es zu der gewollten hydraulischen Dämpfung durch den Rückstau des Mediums an und nahe der Verengung, was eine Komprimierung des Mediums in diesem Bereich ermöglichen kann. In der Verengung kommt es gleichzeitig zu einer Beschleunigung des Mediums in Richtung des Auslasses, wodurch das vollständige Abfließen des Mediums aus den Freiräumen unterstützt wird.

Die dämpfende Schicht kann im Bereich der Stege eine geschlossene oder eine strukturierte Oberfläche aufweisen, zum Beispiel eine Vielzahl von Noppen. Die Oberfläche kann auch wellenförmig oder zahnförmig sein. Hat die Oberfläche der dämpfenden Schicht keine geschlossene Oberfläche, so wird die Geometrie der Oberfläche bevorzugt so gewählt, dass in der Oberflächenstruktur vorhandenes Material, insbesondere Luft, beim Annähern von Auflagefläche und Gegenfläche in die Freiräume verdrängt wird.

Die Freiräume zwischen den Stegen können frei vom Material der dämpfenden Schicht sein, das heißt, im Bereich befindet sich keine dämpfende Schicht auf der Auflagefläche und/oder Gegenauflagefläche. Die dämpfende Schicht kann alternativ Freiräume aufweisen, die in der dämpfenden Schicht nur als Vertiefungen gebildet sind, so dass die dämpfende Schicht eine Grundfläche umfasst die so groß ist wie die Summe der Stege und der Freiräume. Diese große Grundfläche bildet dann die Auflage- und Verbindungsfläche der dämpfenden Schicht mit der Oberfläche der Auflagefläche und/oder der Gegenauflagefläche. Der Boden der Freiräume kann dabei parallel zur Oberfläche der dämpfenden Schicht verlaufen, sodass der Freiraum überall die gleiche Tiefe aufweist. Der Boden kann aber auch zumindest bereichsweise schräg sein, mit einer geringsten Tiefe am gehäuseseitigen Ende des Freiraums und einer maximalen Tiefe am gegenüberliegenden ventilmittigen Ende. Auch andere Ausbildungen der Freiräume sind denkbar, zum Beispiel ein Boden mit einer zusätzlichen Schrägenkomponente quer zu einer Längsachse des Freiraumes, ein treppenförmiger Boden etc.

Das heißt, über die Geometrie der Stege, die bei angenäherten Auflage- und gegenauflageflächen im Wesentlichen die wirksame dämpfende Schicht bilden, können mechanische Dämpfungseigenschaften des Aktuators eingestellt werden. Parameter der Geometrie der Stege können zum Beispiel die Dicke und die Form der Stege sein. Über die Geometrie der Freiräume können die hydraulischen oder pneumatischen Dämpfungseigenschaften des Aktuators eingestellt werden. Parameter der Freiräume können zum Beispiel die Tiefe und die Form der Freiräume sein.

Gemäß einem zweiten Aspekt umfasst ein Ventil eine Feder mit einer Federkraft, einen Aktuator gemäß dem ersten Aspekt mit einer entgegen der Federkraft wirkbaren Aktuatorkraft, ein Ventilglied, das mittels des Aktuators betätigbar ist, ein Dichtelement das mit dem Ventilglied koppelbar ist, einen Dichtsitz, so dass das Ventil geschlossen ist, wenn das Dichtelement an dem Dichtsitz anliegt.

Das Ventilglied ist entweder, gemäß einer ersten Variante, so bezüglich des Aktuators und der Feder angeordnet ist, dass das Ventil mittels der Aktuatorkraft entgegen der Federkraft geöffnet werden kann oder, gemäß einer zweiten Variante, so angeordnet ist, dass das Ventil bei aktiviertem Aktuator mittels der Aktuatorkraft entgegen der Federkraft geöffnet werden kann. Die erste Variante wird auch als stromlos geschlossene Variante bezeichnet; eine solche Variante ist beispielsweise in der WO 2013098249 A1 dargestellt. Die zweite Variante wird entsprechend als stromlos geöffnete Variante bezeichnet. Im Vergleich zur stromlos geschlossenen Variante ist hier die Anordnung des Magnetankers mit dem des Polkerns bezüglich der Bewegungsrichtung des Ventilglieds vertauscht

Im Folgenden werden insbesondere mehrere mögliche Ausführungsformen, insbesondere mögliche Geometrien der dämpfenden Schicht, anhand von Figuren gezeigt. Es handelt sich dabei um eine Auswahl bevorzugter Ausführungsformen. Die Erfindung ist nicht auf die illustrierten Ausführungsformen begrenzt. Merkmale oder Merkmalskombinationen, die nur den Figuren entnommen werden können, gehören zum Umfang der Erfindung und können einzeln oder in den gezeigten Kombinationen die Erfindung vorteilhaft weiterbilden.

Die Figuren zeigen im Einzelnen:
Figur 1 einen Aktuator gemäß einem ersten Aspekt der Erfindung innerhalb eines Ventils gemäß einem zweiten Aspekt der Erfindung,
Figur 2 Schicht mit einer ersten beispielhaften, nicht erfindungsgemäßen Geometrie,
Figur 3 Schicht mit einer zweiten beispielhaften, nicht erfindungsgemäßen Geometrie,
Figur 4 Schicht mit einer dritten beispielhaften, nicht erfindungsgemäßen Z Geometrie,
Figur 5 Schicht mit einer vierten beispielhaften Geometrie,
Figur 6 Schicht mit einer fünften beispielhaften, nicht erfindungsgemäßen Geometrie,
Figur 7 Schicht mit einer sechsten beispielhaften, nicht erfindungsgemäßen

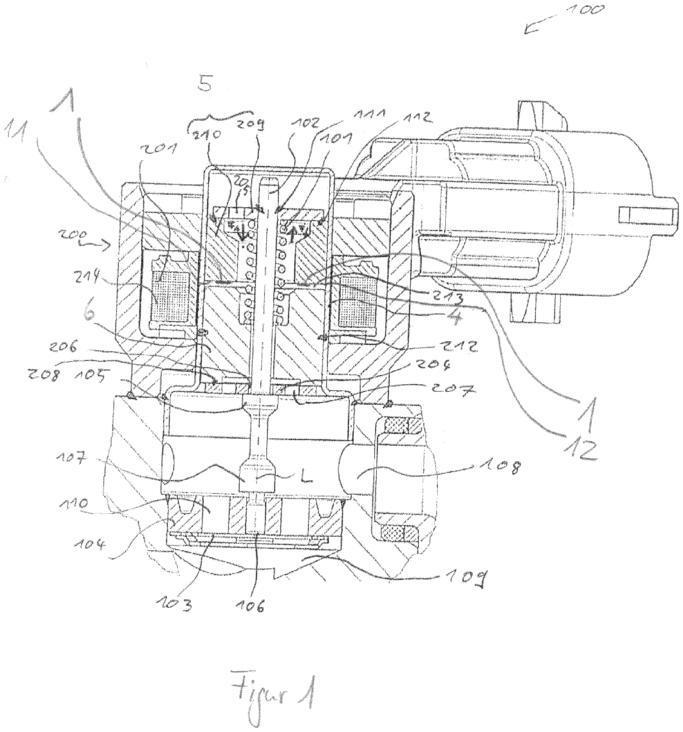

Die Figur 1 zeigt ein Ventil 100. Das Ventil 100 ist insbesondere ein Einlassventil einer Pumpe. Die Pumpe ist insbesondere als Hochdruckpumpe, vorzugsweise als Radialkolbenpumpe ausgebildet. In der Pumpe ist ein Pumpenkolben bewegbar gelagert. An einem Ende des Pumpenkolbens befindet sich ein Druckraum. Um den Druckraum mit Fluid befüllen zu können, weist dieser eine Zulaufleitung auf, in der vorzugsweise das als Einlassventil ausgebildete Ventil 100 angeordnet ist. Das Ventil 100 ist vorzugsweise als digital geschaltetes Ventil ausgebildet. Das Ventil 100 erleichtert die Befüllung des Druckraums und ist eingerichtet beim Ausstoßen des Fluids ein Zurückströmen des Fluids in die Zulaufleitung zu verhindern, wenn das Ventil 100 geschlossen ist. Fluid kann beispielsweise über eine Ablaufleitung aus dem Druckraum ausgestoßen werden.

Das Ventil 100 weist eine Feder 101, einen Stift 102 und ein Dichtelement 103 auf. Die Feder 101 spannt den Stift 102 in Richtung weg von dem Dichtelement 103 vor, indem sich die Feder 101 an einem Polkern 6 eines Aktuators 200 des Ventils 100 abstützt. Die Feder 101 stützt sich mit ihrem zweiten Ende an einem Magnetankerelement 209 ab. Das Magnetankerelement 209 ist gemeinsam mit einem weiteren Magnetankerelement 210 Teil eines Magnetankers 203.

Der Stift 102 ist länglich ausgedehnt und verläuft entlang einer Längsachse L durch den Polkern 6. Auf einer Seite des Polkerns 6 ist der Stift 102 mit dem Magnetankerelement 209 gekoppelt. Insbesondere ist das Magnetankerelement 209 mittels einer Schweißverbindung 111 mit dem Stift 102 gekoppelt. Auf der entlang der Längsachse gegenüberliegenden Seite des Polkerns 6 weist der Stift 102 einen vorspringenden Bereich 105 auf. Der Stift 102 weist einen weiteren vorspringenden Bereich 107 auf, der einem Dichtsitz 104 des Ventils 100 zugewandt ist.

Der Aktuator 200 umfasst einen Elektromagnet 201. Der Elektromagnet 201 umfasst eine Spule 214, die insbesondere ringförmig um den Polkern 6 angeordnet ist. Die Spule 214 umgibt die Längsachse L koaxial. Entlang der Längsachse L ist der Magnetanker 5, darauffolgend der Polkern 6 und darauffolgend der Dichtsitz 104 angeordnet. Auf einer dem Aktuator 200 abgewandten Seite des Dichtsitzes 104 ist das Dichtelement 103 angeordnet. Der Dichtsitz 104 umgibt zumindest eine Durchgangsausnehmung 110. Über die Durchgangsausnehmung 110 kann Fluid strömen, wenn das Dichtelement 103 nicht an dem Dichtsitz 104 anliegt. Insbesondere kann Fluid aus einem Fluidzulauf 108 durch die Durchgangsausnehmungen 110 in einen Fluidablauf 109 strömen.

Wird Strom beziehungsweise Spannung an den Elektromagnet 201 angelegt, insbesondere an die Spule 214, wirkt dieser einen Magnetkraft auf den Magnetanker 5 in Richtung des Dichtelements 103 aus. Diese Aktuatorkraft Fa wird auf den Stift 102 übertragen, da sowohl das Magnetankerelement 209 und das weitere Magnetankerelement 210 über eine Schweißverbindung 112 als auch der Magnetanker 5 mit dem Stift 102 über die Schweißverbindung 111 relativ zueinander unbeweglich gekoppelt sind. Somit wird der Stift 102 durch die Aktuatorkraft Fa in Richtung des Dichtelements 103 bewegt. Der Stift 102 koppelt mit dem Dichtelement 103 und drückt dieses im weiteren Bewegungsablauf von dem Dichtsitz 104 weg. Somit ist das Ventil geöffnet.

Das Ventil 100 öffnet sich auch ohne dass der Stift 102 bewegt wird beziehungsweise ohne dass der Stift 102 und das Dichtelement 103 in Kontakt mit einander geraten, lediglich aufgrund einer Druckdifferenz vor und hinter dem Dichtelement 103. Das Dichtelement 103 hebt von dem Dichtsitz 104 ab, wenn der Druck auf der Seite des Zulaufs 108 größer ist als auf der Seite des Ablaufs 109.

Das Ventil kann also auf zwei Arten geöffnet werden. Das Ventil kann durch den Aktuator erzwungenermaßen geöffnet werden oder gegen einen Druck aus dem Ablauf 109 offengehalten werden. Das Ventil 100 kann aber auch passiv öffnen, ohne dass es elektrisch angesteuert werden muss, wenn die Pumpe sich in der Ansaugphase befindet und ihren Saughub durchführt und Fluid in den Druckraum saugt.

In einer Ruheposition, wenn der Aktuator 200 nicht bestromt wird, drückt die Feder 101 den Stift 102 in eine Richtung weg von dem Dichtelement 103. Eine Federkraft Ff der Feder 101 hält den Stift 102 so, dass das Dichtelement 103 an den Dichtsitz 104 anliegen kann. Die Federkraft Ff und die Aktuatorkraft Fa sind entgegengesetzt gerichtet. Die Federkraft Ff und die Aktuatorkraft Fa sind gleichgerichtet zur Längsachse L. Zum Schließen des Ventils wird das Dichtelement durch die Druckverhältnisse vor und hinter dem Dichtelement gegen den Dichtsitz 104 gedrückt und verhindert somit einen Fluidfluss aus dem Ablauf 109 in den Zulauf 108.

Die Bewegung des Dichtelements 103 relativ zum Dichtsitz 104 ist also in einem Betriebszustand des Ventils unabhängig von einer Bewegung des Stifts 102. Durch den Stift 102 kann das Öffnen des Ventils 100 unterstützt werden und/oder das Ventil 100 in seiner Offenposition gehalten werden auch während eines Förderhubs in einer Kompressionsphase der Pumpe. Somit kann eine Teilförderung der Pumpe erreicht werden, bei der ein vorgegebener Anteil des angesaugten Fluids aus dem Druckraum wieder zurück in den Zulauf 108 gefördert wird. Dazu wird das Dichtelement 103 durch den Stift 102 beabstandet zu dem Dichtsitz 104 gehalten. Der Aktuator 200 wirkt die Aktuatorkraft Fa so auf den Stift 102 aus, dass der Stift 102 das Dichtelement 103 gegen den Fluiddruck aus dem Druckraum halten kann und somit Fluid durch die Durchgangsausnehmungen 110 zurück in den Zulauf 108 strömen kann.

Eine Vollförderung der Pumpe ist unabhängig von dem Aktuator 200 realisierbar. In der Ansaugphase der Pumpe muss der Aktuator 200 nicht gegen eine Federkraft arbeiten, die das Dichtelement gegen den Dichtsitz drückt. In der Kompressionsphase unterstützt das Dichtelement 103 die Feder 101 beim Schießvorgang, da das Dichtelement 103 den Stift 102 bewegt. Somit sind kurze Schließzeiten des Ventils 101 realisierbar. Ein Luftspalt 213 zwischen dem weiteren Magnetankerelement 210 und dem Polkern 6 ist im Ruhezustand konstant.

Der Magnetanker 5 mit dem gekoppelten Stift 102 wird bei bestromtem Elektromagnet 201 in Richtung des Polkerns 6 gezogen. Der Stift 102 öffnet das Dichtelement 103. Bei unbestromtem Elektromagnet 201 wird der Magnetanker 5 mit dem Stift 102 durch die Feder 101 in die Ausgangsstellung gedrückt. Das Einlassventil wird dadurch entsperrt.

Eine Bewegung des Stifts 102 in Richtung weg von dem Dichtelement 103 wird durch ein Anschlagelement 204 begrenzt. Insbesondere schlägt der vorspringende Bereich 105 des Stifts 102 an das flächig ausgedehnte Anschlagelement 204 an. Der Stift 102 ist von dem federnden Dichtelement 103 entkoppelt. Das Dichtelement 103 ist so gestaltet, dass bei ausgeschaltetem Elektromagnet 201 kein Druck gegen das Dichtelement 103 durch den Stift 102 vorhanden ist. Das Ventil 100 kann unabhängig von dem Elektromagnet 201 und dem Stift 102 arbeiten und insbesondere unabhängig von dem Elektromagnet 201 in der Ansaugphase öffnen. In der Kompressionsphase wirkt die Federkraft des Dichtelements zusätzlich zur Feder 101, um das Einlassventil zu schließen.

Das Anschlagelement 204 dient als Begrenzung der Bewegung des Stifts 102. Wenn der vorspringende Bereich 105 mit dem Anschlagelement 204 in Kontakt kommt, ist eine Bewegung des Stifts 102 weiter weg vom Dichtelement 103 nicht mehr möglich. Dadurch ist auch ein Abstand 106 zwischen dem Stift 102 und dem Dichtelement 103 in der Ruheposition vorgegeben. Die Bewegung des Stifts in Richtung des Dichtelements 103 wird durch den weiteren vorspringenden Bereich 107 und den Dichtsitz 104 begrenzt. Das Anschlagelement 204 weist eine Ausnehmung 206 auf, durch die der Stift 102 geführt ist. Das Anschlagelement 204 ist auf der dem Magnetanker 5 abgewandten Seite des Polkerns 6 angeordnet. Insbesondere ist das Anschlagelement 204 über eine Schweißverbindung 208 mit dem Polkern 6 gekoppelt. Das Anschlagelement 204 ist insbesondere eine gehärtete Scheibe die den weicheren Polkern 6 schützt.

Das Anschlagelement 204 weist gemäß Ausführungsformen mindestens eine weitere Ausnehmung 207 auf. Diese ist hydraulisch mit der Ausnehmung des Polkerns 6 gekoppelt, in der der Stift 102 durch den Polkern 6 geführt ist. Weiterhin weist das Magnetankerelement 209 eine Magnetankeraufnehmung 204 auf, die hydraulisch mit der Ausnehmung des Polkerns 6 gekoppelt ist. Somit sind die dem Dichtelement 103 abgewandte Seite des Magnetankers 203 und die dem Dichtelement 103 zugewandte Seite des Anschlagelements 204 hydraulisch miteinander gekoppelt. Somit kann ein Druckausgleich zwischen dem fluidführenden Bereich am Fluidzulauf 108 und dem Bereich des Magnetankers 203 stattfinden. Somit wird eine Bewegung des Stifts 102 aufgrund von Druckungleichgewichten vermieden.

Der Polkern 6 ist über eine Schweißverbindung 212 mit einem Gehäuse 4 gekoppelt, in dem auch der Magnetanker 5 und teilweise der Stift 102 angeordnet sind. Das Gehäuse 4 umgibt den Stift 102, den Magnetanker 5 und den Polkern 6 fluiddicht.

Durch das Anschlagelement 204 wird eine Bewegung des Stifts 102 in Richtung der Federkraft Ff begrenzt und Kräfte beim Abbremsen der Bewegung des Stifts 102 von dem Anschlagelement 204 aufgenommen. Zudem ist durch die Begrenzung der Bewegung des Stifts 102 eine präzise Einstellung des Luftspalts 213 möglich. Somit ist durch das Anschlagelement 204 eine Begrenzung für die Bewegung des Stifts 102 gegeben, obwohl der Stift 102 nicht fest mit dem Dichtelement 103 gekoppelt ist.

Auf dem Magnetanker 5 ist eine Schicht 1 auf einer Auflagefläche 11 des Magnetankers 5 befestigt oder aufgelegt. Die Schicht 1 könnte ebenso auf einer Gegenauflagefläche 12 des Polkerns 6 angebracht sein. Alternativ können sowohl auf der Auflagefläche 11 sowie auf der Gegenauflagefläche 12 Schichten 1 aufgebracht sein.

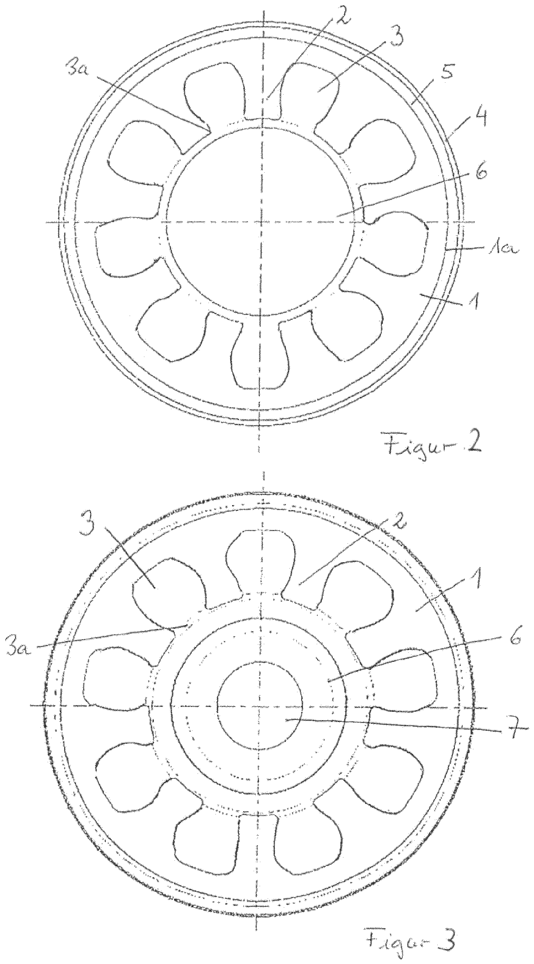

Die Figur 2 zeigt eine Draufsicht auf einen Teil eines Magnetventils mit dem (Ventil-) Gehäuse 4, dem Magnetanker 5 und dem Polkern 6. Auf dem Magnetanker 5 ist eine Schicht 1 befestigt oder aufgelegt. Die Schicht 1 weist Stege 2 und zwischen jeweils zwei benachbarten Stegen 2 Freiräume 3 auf. Die Geometrie der Freiräume 3 wird durch die Form der Stege 2 bestimmt.

In der Figur 2 weisen die Freiräume 3 eine nicht erfindungsgemäße Form auf, wie sie zum Beispiel die Zähne von Förderpumpen haben können.

Die Schicht 1 hat einen gehäuseseitigen Außenrand 1a, der im gezeigten Ausführungsbeispiel umfänglich geschlossen ist. Die Freiräume 3 sind an ihrem polkernseitigen Ende 3a leicht verengt, was dazu führt, dass bei einer Schließbewegung des Ventils das in den Freiräumen 3 vorhandene Medium durch diese Engstelle verdrängt werden muss, wodurch die Schließbewegung des Ventils gedämpft wird.

Gleichzeitig sorgen die Stege 2 dafür, dass es zu keinem direkten mechanischen Kontakt zwischen dem gezeigten Teil des Magnetventils und dem nicht gezeigten Gegenpart kommt, was zusätzlich zu einer Geräuschdämmung beim Schließen des Ventils führen kann und ein magnetisches und/oder hydraulischen Kleben des Ventils verhindert.

Die Figur 3 zeigt ebenfalls eine Draufsicht auf einen Teil eines Magnetventils, der einen Polkern 6 und eine Federaufnahme 7 aufweist, in der sich eine nicht gezeigte Feder abstützt, die das stromlose Ventil in einer geschlossen Stellung halten kann. Die nicht erfindungsgemäße Schicht 1 weist an ihrem inneren Ende einen größeren Abstand zum Polkern 6 auf, als die in der Figur 2 gezeigte Ausführung. Gleichzeitig weisen die Freiräume 3 einen engeren Auslass 3a auf, sodass die hydraulische Dämpfung beider Ausführungen in etwa gleich groß sein dürfte.

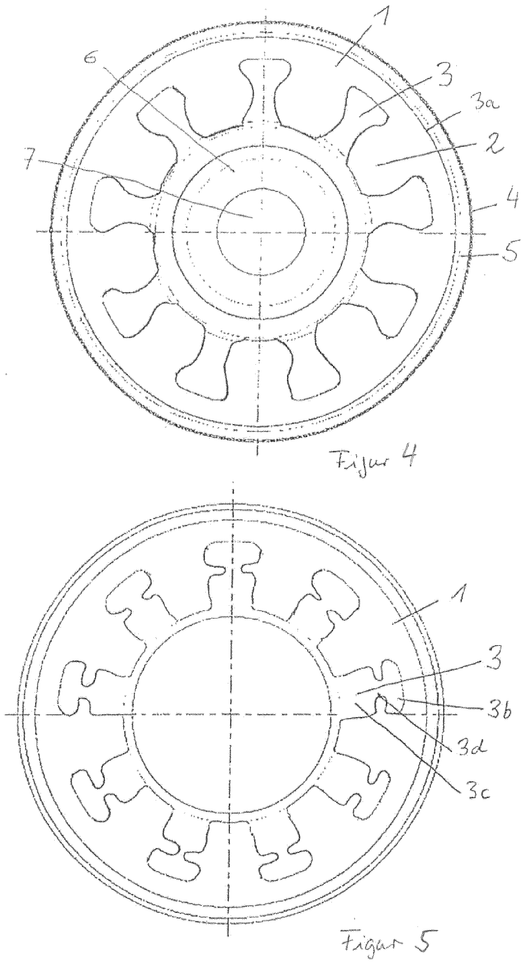

In der Figur 4 ist eine weitere Ausführung einer nicht erfindungsgemäßen Schicht 1 dargestellt. Hier überwiegt die Fläche der Stege 2 gegenüber der Fläche der Freiräume 3, wodurch eine bessere mechanische Dämpfung der Schließbewegung des Ventils erfolgt, bei gleichzeitiger Reduzierung der hydraulischen Dämpfung.

Die Figur 5 zeigt eine Schicht 1 mit Freiräumen 3 die eine erste Kammer 3b und eine zweite Kammer 3c bilden, mit einer engen Kanalverbindung 3d zwischen den beiden Kammern 3b und 3c. Diese Geometrie führt zu einer guten hydraulischen Dämpfung der Schließbewegung bis das Medium aus den ersten Kammern 3b gepresst wurde und einer anschließenden gleichmäßigen Schlussschließbewegung.

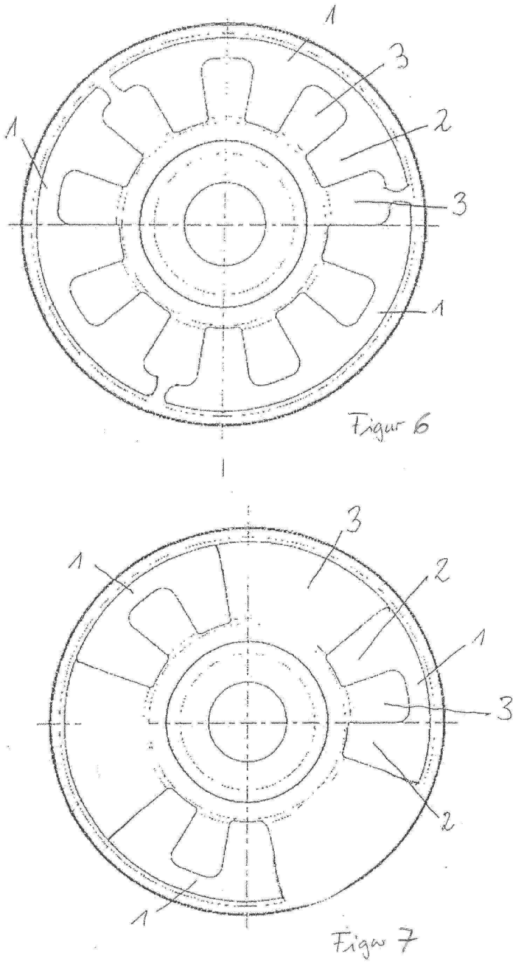

In den Figuren 6 und 7 sind nicht erfindungsgemäßen Ausführungen gezeigt, in denen die Schicht 1 nicht in einem Stück gebildet sind, sondern aus mehreren Teilschichten 1 bestehen. Auch diese Ausführungen weisen Stege 2 und zwischen jeweils zwei benachbarten Stegen 2 gebildete Freiräume 3 auf. Die Freiräume 3 können wie die Freiräume 3 in den Figuren 2 bis 5 gebildet sein oder jede andere beliebige Form aufweisen, die dafür sorgt, dass ein hydraulischer, insbesondere pneumatischer Dämpfungseffekt bei der Annäherungsbewegung der Auflagefläche 11 und Gegenauflagefläche 12 des Aktuators erreicht wird und das Medium zuverlässig möglichst vollständig aus den Freiräumen in den Ventilauslass verdrängt werden kann.

## Patentansprüche

1. Elektromagnetischer Aktuator (200) umfassend:
- einen Elektromagnet (201), umfassend eine Spule (214), die einen Polkern (6) umgibt,
- einen Magnetanker (203), der mittels des Elektromagnets (201) in Richtung des Polkerns (6) bewegbar ist, wobei
- der Magnetanker (203) eine dem Polkern (6) zugewandte Auflagefläche (11) aufweist und
- der Polkern (6) eine entsprechend gegenüberliegende Gegenfläche (12) aufweist,
wobei die Auflagefläche (11) und/oder die Gegenauflagefläche (12) eine Schicht (1) aufweist/aufweisen, die eine direkte Berührung der Auflagefläche (11) mit der Gegenauflagefläche (12) verhindert und eine Dämpfung der annähernden Bewegung bewirkt, wobei die Schicht (1) Stege (2) und Freiräume (3) zwischen jeweils zwei benachbarten Stegen (2) aufweist,
**dadurch gekennzeichnet, dass** die Freiräume (3) eine erste Kammer (3b) und eine zweite Kammer (3c) mit einer engen Kanalverbindung (3d) zwischen den beiden Kammern (3b, 3c) bilden..

2. Elektromagnetischer Aktuator (200) nach Anspruch 1, wobei die Schicht (1) mit der Auflagefläche (11) und/oder der Gegenauflagefläche (12) verbunden, zum Beispiel auf die Auflagefläche (11) und/oder die Gegenauflagefläche (12) aufgelegt, aufgeklebt oder aufgeschweißt ist.

3. Elektromagnetischer Aktuator (200) nach einem der Ansprüche 1 oder 2, wobei die Schicht (1) eine gleichmäßige Dicke aufweist.

4. Elektromagnetischer Aktuator (200) nach einem der vorgehenden Ansprüche, wobei die Schicht (1) wenigstens teilweise in eine in einer Oberfläche der Auflagefläche (11) und/oder Gegenauflagefläche (12) gebildeten Vertiefung eingebracht und dort befestigt ist, zum Beispiel durch Adhäsion oder Formschluss, wobei wenigstens ein Teil der Schicht (1) über eine Oberseite der Auflagefläche (11) und/oder Gegenauflagefläche (12) in Richtung der Gegenauflagefläche (12) bzw. der Auflagefläche (11) vorsteht.

5. Elektromagnetischer Aktuator (200) nach dem vorgehenden Anspruch, wobei die Freiräume (3) durch die Stege (2) so geformt sind, dass sich ein in den Freiräumen (3) vorhandenes Medium, insbesondere Luft, bei der annähernden Bewegung der Auflagefläche (11) und der Gegenauflagefläche (12) in wenigstens einem Teilbereich des jeweiligen Freiraums (3) staut und dadurch die annähernde Bewegung der Auflagefläche (11) zur Gegenauflagefläche (12) hydraulisch, insbesondere pneumatisch, dämpft.

6. Elektromagnetischer Aktuator (200) nach einem der vorgehenden Ansprüche, wobei die Schicht (1) zumindest teilweise aus einem Metall, aus einem Verbundstoff oder einem Kunststoff besteht.

7. Ventil, umfassend:
- eine Feder (101) mit einer Federkraft (Ff),
- einen elektromagnetischen Aktuator (200) gemäß einem der vorhergehenden Ansprüche mit einer entgegen der Federkraft (Ff) wirkbaren Aktuatorkraft (Fa),
- ein Ventilglied (102, 107), das mittels des Aktuators (200) betätigbar ist,
- ein Dichtelement (103), das mit dem Ventilglied koppelbar ist,
- einen Dichtsitz (104), so dass das Ventil geschlossen ist, wenn das Dichtelement (103) an dem Dichtsitz (104) anliegt,
wobei das Ventilglied (102, 107) entweder so bezüglich des Aktuators (200) und der Feder (101) angeordnet ist, dass das Ventil mittels der Aktuatorkraft (Fa) entgegen der Federkraft (Ff) geöffnet werden kann oder so angeordnet ist, dass das Ventil bei aktiviertem Aktuator (200) mittels der Aktuatorkraft (Fa) entgegen der Federkraft (Ff) geschlossen werden kann, wobei
- der Aktuator (200) umfasst:
- einen Elektromagnet (201), umfassend eine Spule (214), die einen Polkern (6) umgibt,
- einen Magnetanker (203), der mittels des Elektromagnets (201) in Richtung des Polkerns (6) bewegbar ist, wobei
- der Magnetanker (203) eine dem Polkern (6) zugewandte Auflagefläche (11) aufweist und
- der Polkern (6) eine entsprechend gegenüberliegende Gegenfläche (12) aufweist.

8. Einspritzpumpe für einen Verbrennungsmotor mit wenigstens einem Ventil nach dem vorhergehenden Anspruch.

## Claims

1. Electromagnetic actuator (200), comprising:
- an electromagnet (201) comprising a coil (214) which surrounds a pole core (6),
- a magnet armature (203) which can be moved in the direction of the pole core (6) by means of the electromagnet (201), wherein
- the magnet armature (203) has a support face (11) facing toward the pole core (6), and
- the pole core (6) has a correspondingly facing counterpart face (12),
wherein the support face (11) and/or the counterpart support face (12) have/has a layer (1) which prevents direct contact between the support face (11) and the counterpart support face (12) and which effects damping of the approach movement,
wherein the layer (1) has webs (2) and free spaces (3) between in each case two adjacent webs (2),
**characterized in that** the free spaces (3) form a first chamber (3b) and a second chamber (3c), with a narrow duct connection (3d) between the two chambers (3b, 3c).

2. Electromagnetic actuator (200) according to Claim 1, wherein the layer (1) is connected to the support face (11) and/or to the counterpart support face (12), for example is laid, adhesively bonded or welded onto the support face (11) and/or the counterpart support face (12).

3. Electromagnetic actuator (200) according to either of Claims 1 and 2, wherein the layer (1) has a uniform thickness.

4. Electromagnetic actuator (200) according to one of the preceding claims, wherein the layer (1) is at least partially inserted into a depression formed in a surface of the support face (11) and/or of the counterpart support face (12) and is fastened there, for example by adhesive or positive locking, wherein at least a part of the layer (1) protrudes beyond a top side of the support face (11) and/or counterpart support face (12) in the direction of the counterpart support face (12) or of the support face (11) respectively.

5. Electromagnetic actuator (200) according to the preceding claim, wherein the free spaces (3) are formed by the webs (2) such that a medium, in particular air, which is present in the free spaces (3) builds up in at least one subregion of the respective free space (3) during the approach movement of the support face (11) and the counterpart support face (12) and thus hydraulically, in particular pneumatically, dampens the approach movement of the support face (11) toward the counterpart support face (12).

6. Electromagnetic actuator (200) according to one of the preceding claims, wherein the layer (1) is composed at least partially of a metal, of a composite material or of a plastic.

7. Valve, comprising:
- a spring (101) with a spring force (Ff),
- an electromagnetic actuator (200) according to one of the preceding claims, with an actuator force (Fa) which can act counter to the spring force (Ff),
- a valve member (102, 107) which can be actuated by means of the actuator (200),
- a sealing element (103) which can be coupled to the valve member,
- a sealing seat (104) such that the valve is closed when the sealing element (103) bears against the sealing seat (104),
wherein the valve member (102, 107) is either arranged relative to the actuator (200) and the spring (101) such that the valve can be opened by means of the actuator force (Fa) counter to the spring force (Ff) or arranged such that the valve can be closed by means of the actuator force (Fa) counter to the spring force (Ff) when the actuator (200) is activated, wherein:
- the actuator (200) comprises:
- an electromagnet (201) comprising a coil (214) which surrounds a pole core (6),
- a magnet armature (203) which can be moved in the direction of the pole core (6) by means of the electromagnet (201), wherein
- the magnet armature (203) has a support face (11) facing toward the pole core (6), and
- the pole core (6) has a correspondingly facing counterpart face (12).

8. Injection pump for an internal combustion engine, having at least one valve according to the preceding claim.

## Revendications

1. Actionneur électromagnétique (200), comprenant :
- un électroaimant (201), comprenant une bobine (214), qui entoure un noyau polaire (6),
- un induit magnétique (203) qui peut être déplacé au moyen de l'électroaimant (201) dans la direction du noyau magnétique (6),
- l'induit magnétique (203) présentant une surface d'appui (11) tournée vers le noyau polaire (6) et
- le noyau polaire (6) présentant une surface conjuguée (12) opposée de manière correspondante,
la surface d'appui (11) et/ou la surface d'appui conjuguée (12) présentant une couche (1) qui empêche un contact direct de la surface d'appui (11) avec la surface d'appui conjuguée (12) et qui provoque un amortissement du mouvement de rapprochement, la couche (1) présentant des nervures (2) et des espaces libres (3) entre deux nervures respectivement adjacentes (2),
**caractérisé en ce que** les espaces libres (3) forment une première chambre (3b) et une deuxième chambre (3c) avec une liaison de canal étroite (3d) entre les deux chambres (3b, 3c).

2. Actionneur électromagnétique (200) selon la revendication 1, dans laquelle la couche (1) est connectée à la surface d'appui (11) et/ou à la surface d'appui conjuguée (12), par exemple est posée, collée ou soudée sur la surface d'appui (11) et/ou sur la surface d'appui conjuguée (12).

3. Actionneur électromagnétique (200) selon l'une quelconque des revendications 1 ou 2, dans lequel la couche (1) présente une épaisseur uniforme.

4. Actionneur électromagnétique (200) selon l'une quelconque des revendications précédentes, dans lequel la couche (1) est introduite au moins en partie dans un renfoncement formé dans une surface de la surface d'appui (11) et/ou de la surface d'appui conjuguée (12) et y est fixée, par exemple par adhésion ou par engagement par correspondance de formes, au moins une partie de la couche (1) faisant saillie au-delà d'un côté supérieur de la surface d'appui (11) et/ou de la surface d'appui conjuguée (12) dans la direction de la surface d'appui conjuguée (12) ou de la surface d'appui (11).

5. Actionneur électromagnétique (200) selon la revendication précédente, dans lequel les espaces libres (3) sont formés par les nervures (2) de telle sorte qu'un milieu présent dans les espaces libres (3), en particulier de l'air, s'accumule lors du mouvement de rapprochement de la surface d'appui (11) et de la surface d'appui conjuguée (12) dans au moins une région partielle de l'espace libre respectif (3) et amortisse ainsi le mouvement de rapprochement de la surface d'appui (11) vers la surface d'appui conjuguée (12) de manière hydraulique, en particulier pneumatique.

6. Actionneur électromagnétique (200) selon l'une quelconque des revendications précédentes, dans lequel la couche (1) se compose au moins en partie d'un métal, d'un matériau composite ou d'un plastique.

7. Soupape, comprenant :
- un ressort (101) avec une force de ressort (Ff),
- un actionneur électromagnétique (200) selon l'une quelconque des revendications précédentes avec une force d'actionneur (Fa) pouvant agir à l'encontre de la force de ressort (Ff),
- un organe de soupape (102, 107) qui peut être actionné au moyen de l'actionneur (200),
- un élément d'étanchéité (103) qui peut être accouplé à l'organe de soupape,
- un siège d'étanchéité (104), de sorte que la soupape soit fermée quand l'élément d'étanchéité (103) s'applique contre le siège d'étanchéité (104),
l'organe de soupape (102, 107) étant disposé par rapport à l'actionneur (200) et au ressort (101) de telle sorte que la soupape puisse être ouverte au moyen de la force d'actionneur (Fa) à l'encontre de la force de ressort (Ff) ou étant disposé de telle sorte que la soupape, lorsque l'actionneur est activé (200), puisse être fermée au moyen de la force d'actionneur (Fa) à l'encontre de la force de ressort (Ff),
- l'actionneur (200) comprenant :
- un électroaimant (201), comprenant une bobine (214) qui entoure un noyau polaire (6),
- un induit magnétique (203) qui peut être déplacé au moyen de l'électroaimant (201) dans la direction du noyau polaire (6),
- l'induit magnétique (203) présentant une surface d'appui (11) tournée vers le noyau polaire (6) et
- le noyau polaire (6) présentant une surface conjuguée (12) opposée de manière correspondante.

8. Pompe d'injection pour un moteur à combustion interne comprenant au moins une soupape selon l'une quelconque des revendications précédentes.
